# EUROPEAN PATENT SPECIFICATION

(11) **EP 4 030 068 B1**
(45) Date of publication and mention of the grant of the patent: **04.12.2024**
(21) Application number: 22151065.4
(22) Date of filing: 11.01.2022
(51) Int. Cl.: F16B 1/00, F16B 21/08, F16B 45/00

(54) **VERIFICATION CAP**
VERIFIZIERUNGSKAPPE
CAPUCHON DE VÉRIFICATION

(30) Priority: 18.01.2021 ES 202130025 U
(43) Date of publication of application: 20.07.2022
(73) Proprietor: Illinois Tool Works Inc., Glenview, IL 60025 (US)
(72) Inventor: COBACHO, Luis, Glenview, 60025 (US); CAÑADO DELGADO, Alexis, Glenview, 60025 (US); BROODRYK, Adriaan, Glenview, 60025 (US)
(74) Representative: HGF

(56) References cited:
- EP-A1- 2 700 828
- US-B1- 6 381 806

## Description

The invention relates to a verification cap assembly including a verification cap and a fastening clip.

### Background

In the automotive industry, fastening clips are used to mount components, structures or panels to the frame of a vehicle. One particular type of fastening clip for use in a storage compartment of a vehicle, is embedded to a base panel or a side panel of the storage compartment. Such a fastening clip is located at a fixed point, or more often, multiple fixed points, of the storage compartment. The fastening clip(s) is connected to a luggage ring, onto which loose objects such as shopping bags or items are attached so that they do not move around the storage compartment when the vehicle is in motion. Other types of fastening clips are also known within the automotive industry.

Typically, in an automotive manufacturing process, a number of fastening clips are assembled into the storage compartment using fasteners, which can be a time-consuming process. When all of the fastening clips and respective luggage rings are installed, the vehicle undergoes an inspection to check the quality of the fittings. This involves verifying that all of the fastening clips are installed properly. For example, the torque data recorded by electronic screwdrivers when installing the screwed luggage ring is used to verify correct installation. From this, it is understandable that having to carry and use a tool in order to install a luggage ring can be rather cumbersome, especially when access to the vehicle location is difficult. Also, since there are typically many fastening clips installed, the process for checking the quality of the fittings can be time-consuming and tedious. The process for quality checking is especially tedious when the fastening clips are placed in hard-to-reach locations. Often, fastening clips are placed within these hard-to-reach locations in order to prevent any objects attached to the fastening clips from moving around during transport. For example, some storage compartments of vehicles have fastening clips connected to luggage rings placed at a location close to the rear passenger seats. It is particularly important to ensure that the fastening clips are properly installed in order to avoid vibrations when the vehicle is running. EP2700828A1 discloses a fastener allowing the fastening completion state to be clearly displayed.

It would be desirable to provide a verification cap that can alleviate or mitigate one or more of the aforementioned problems. Particularly, it is an object of the invention to provide a verification cap that facilitates a quick and efficient way of verifying installation of a fastening clip to a support structure. More specifically, it is an object of the invention to provide a verification cap that can quickly verify whether a fastening clip is properly installed into a support structure. It is another object of the invention to provide a verification cap that can allow an installer to efficiently verify installation of a fastening clip to a support structure by visual inspection only, which removes the need for tedious and unnecessarily involved inspection processes.

### Summary of the Invention

In accordance with the present invention there is provided a verification cap assembly according to the appended claims.

According to an aspect of the present invention, there is provided a verification cap for verifying installation of a fastening clip to a support structure, comprising:
a tubular base member, comprising an enclosing side wall defining an interior space between an open bottom end portion and an open top end portion, configured to retainingly receive at least a portion of the fastening clip during assembly, and
a cover member, hingeably connected to the base member and movable between a closed position, lockingly engaged with the top end portion of the side wall, and an open position, disengaged from the top end portion of the side wall, comprising at least one stop member projecting away from the cover member into the interior space so as to define a predetermined restricted space for accommodating at least one component of the fastening clip between the bottom end portion and a distal end of the stop member when the cover member is in the closed position, during use.

Thus, the correct (i.e. complete) installation of a fastening clip to a support structure can be quickly and efficiently verified. The provision of at least one stop member projecting away from the cover member provides a restricted space of a predetermined size that accommodates at least one component of the fastening clip. When the cover member is in the closed position, the at least one component of the fastening clip is accommodated within the space, to provide verification that the fastening clip is properly installed. If, however, the fastener clip is not properly installed, the space does not provide sufficient room to accommodate the at least one component of the fastening clip, and therefore the cover member is placed into an open position, disengaged from the top end part of the base member. The position of the cover member relative to the base member, in either a closed position or an open position, indicates whether or not, respectively, a fastening clip is fully installed to a support structure. This verification cap can therefore provide a visual indication of whether the fastening clip is properly installed, removing the need for tedious and time-consuming inspection processes.

Advantageously, in some embodiments, the interior space is configured to retainingly receive a head portion of the fastening clip, during assembly.

Advantageously, in some embodiments, the stop member is configured to contactingly engage with the at least one component when the at least one component is not entirely contained within the predetermined restricted space of the base member.

Advantageously, in specific embodiments, the stop member comprises a latch at a distal end configured to catchingly engage with an aperture of the fastening clip when in the closed position.

Advantageously, in some embodiments, the base member comprises two opposing parallelly arranged pairs of teeth adapted to retainingly couple with a head portion of the fastening clip.

Advantageously, in some specific embodiments, the teeth extend from the side wall into the interior space and up towards the top end portion.

Advantageously, in some embodiments, the teeth comprise a latch portion configured to engage with the head portion of the fastening clip.

Advantageously, in some embodiments, the cover member comprises a lock member projecting away from the cover member, and the base member comprises a respective catch member configured to lockingly engage with the lock member when the cover member is in the closed position.

Advantageously, in some specific embodiments, the catch member is further adapted to selectively disengage from the lock member.

Advantageously, in some embodiments, the verification cap comprises two parallelly arranged stop members, spaced apart from one another at a distance corresponding to a distance between two respective components of the fastening clip.

Advantageously, in some specific embodiments, the at least one component is a bearing surface of an elastically deformable biasing member of the fastening clip, the bearing surface extending in a direction substantially parallel to a flat upper surface of the head portion of the fastening clip.

Advantageously, in some embodiments, the base member comprises a skirt portion projecting laterally outwardly from the bottom end portion and adapted to provide a seal between the verification cap and the support structure, during use.

Accordingly to the present invention, there is provided a verification cap assembly, comprising a fastening clip and a verification cap. The fastening clip is for installation to at least one support structure, and has a body portion and a head portion. The verification cap is adapted to enclosingly receive the fastening clip when fastened to the at least one support structure.

Advantageously, in some embodiments, the fastening clip further comprises a pivotably movable ring member operably arranged outside the verification cap.

Advantageously, in some embodiments, the ring member is operably coupled to and forming a friction fit with the head portion of the fastening clip.

### Brief Description of the Drawings

Embodiments of the invention are now described, by way of example only, hereinafter with reference to the accompanying drawings, in which:
- **Figure 1**: illustrates a perspective view of a verification cap assembly including a verification cap, a fastening clip and additionally, a luggage ring secured to the fastening clip;
- **Figure 2**: illustrates a perspective view of a fastening clip and luggage ring assembled together;
- **Figure 3**: illustrates **(a)** a side view, and **(b)** a front view of the fastening clip and luggage ring assembly of Figure 2;
- **Figure 4**: illustrates a perspective view of a verification cap assembly with a fastening clip **(a)** separated from the verification cap, and **(b)** assembled in the verification cap;
- **Figure 5**: illustrates a perspective view of a verification cap assembly, showing a luggage ring and verification cap in **(a)** an open position with a raised luggage ring, and **(b)** a closed position with a lowered luggage ring;
- **Figure 6**: illustrates a perspective view of a verification cap assembly that is **(a)** separate from a panel structure, and **(b)** installed into a panel structure;
- **Figure 7**: illustrates a section view of the fastening clip and luggage ring assembly through A-A of Figure 3(b), showing the assembly installed into a support structure;
- **Figure 8**: illustrates a section view of a verification cap assembly in a closed position, having a fastening clip fully (i.e. correctly) installed into a support structure;
- **Figure** 9: illustrates a schematic side section view of a verification cap assembly in **(a)** a closed position with the lid engaged together with the base, and **(b-d)** an open position with the lid disengaged from the base, and
- **Figure 10**: illustrates a (a) side view and (b) a top view, as well as, (c) a perspective view of an alternative embodiment of the verification cap assembly in closed position.

### Detailed Description

Certain terminology is used in the following description for convenience only and is not limiting. The words 'right', 'left', 'lower', 'upper', 'front', 'rear', 'upward', 'down' and 'downward' designate directions in the drawings to which reference is made and are with respect to the described component when assembled and mounted. The words 'inner', 'inwardly' and 'outer', 'outwardly' refer to directions toward and away from, respectively, a designated centreline or a geometric centre of an element being described (e.g. central axis), the particular meaning being readily apparent from the context of the description.

Further, as used herein, the terms 'connected', 'attached', 'coupled', 'mounted' are intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the use of ordinal adjectives, such as, "first", "second", "third" etc. merely indicate that different instances of like objects are being referred to and are not intended to imply that the objects so described must be in a given sequence, either temporally, spatially, in ranking or in any other manner.

Like reference numerals are used to depict like features throughout.

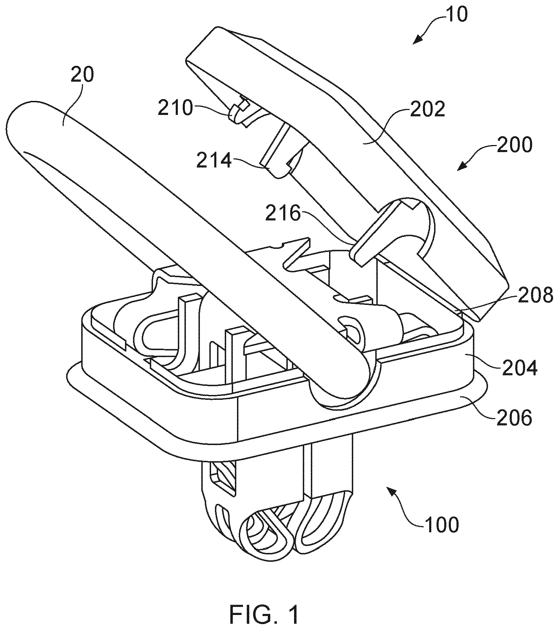

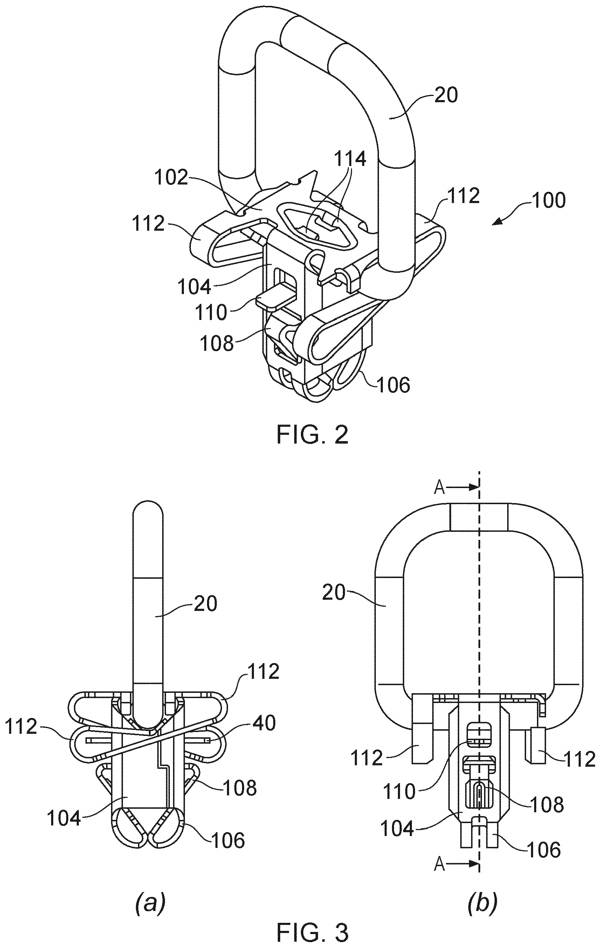

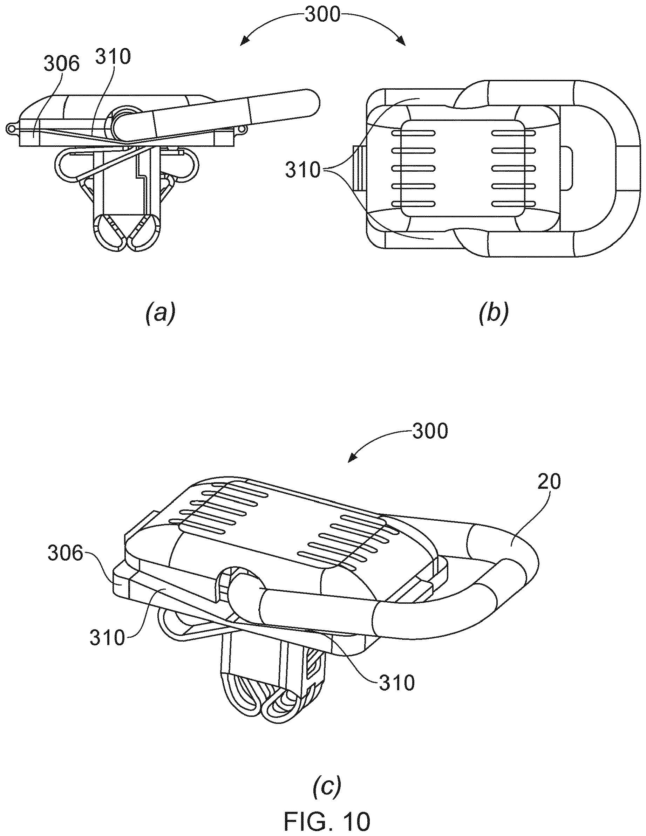

Referring now to Figure 1, there is shown a luggage ring assembly 10 including a fastening clip 100 having a body (104, Figure 2) which secures a luggage ring 20 in a way that allows the luggage ring 20 to be pivoted relative to fastening clip 100. The assembly 10 also includes a verification cap 200 provided with an upper lid 202 and a lower base 204. The lid 202 is connected together with the base 204 by a hinge 208 which allows the lid 202 to pivot about the base 204 between open and closed position. The base 204 has an outer side wall that defines an interior space of a predetermined depth. The side wall is formed as a single part having two pairs of opposing wall portions. The ends of the base 204 at the top and at the bottom are open, so that the outer side wall of the base 204 forms a tubular structure. In this example embodiment, the side wall of the base 204 has a square profile when viewed from the top. However, it is envisaged that the base 204 may have a different profile other than a square, such as a circle or polygon, for example. The lid 202 is provided with an outer side wall with a profile corresponding to the profile of the base 204. The outer side wall of the lid 202 is formed as a single part having two pairs of opposing wall portions. The bottom end of the lid 202 side wall is open, having a square profile when viewed from the bottom. The top end of the lid 202 is closed. The lid 202 and the base 204 are shaped such that when they are closed together about the hinge 208, they form an enclosure which is closed at the top, and open at the bottom. The bottom of the base 204 is open in order to receive a head (102, Figure 2) of the fastening clip 100 within the interior space of the base 204. A skirt 206 is integrally formed on a lower part of the base 204, laterally protruding in a direction perpendicular to the side wall. The skirt 206 provides sealing properties when the assembly 10 is inserted into a support structure. Additionally, or alternatively, the skirt 206 is configured to cover any gaps between the trim or vehicle surface and the lower base 204 (e.g. due to tolerances) (see, for example, the alternative design of the verification cap 300 shown in Figure 10). The skirt 206 is continuous around the entire bottom edge of the base 204. In this example embodiment, the side walls of the lid 202 and base 204 each have a semi-circular cut-out (i.e. opening) on opposite wall portions, so that when the lid 202 and base 204 come together into a closed position, a circular opening is formed on opposite wall portions where the semi-circular cut-outs are formed. The circular opening is sized to house a section of the luggage ring 20 when the luggage ring 20 is secured to the fastening clip 100.

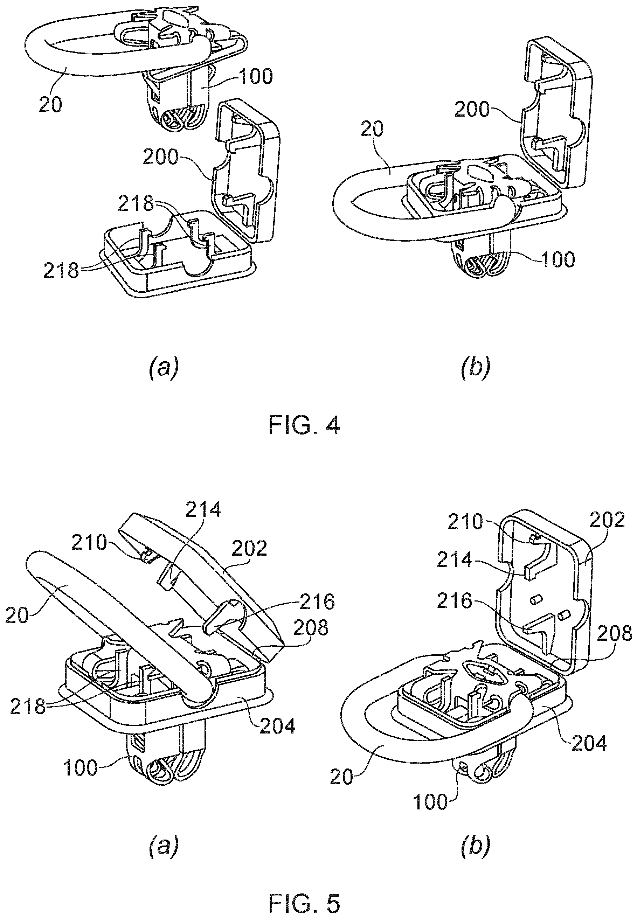

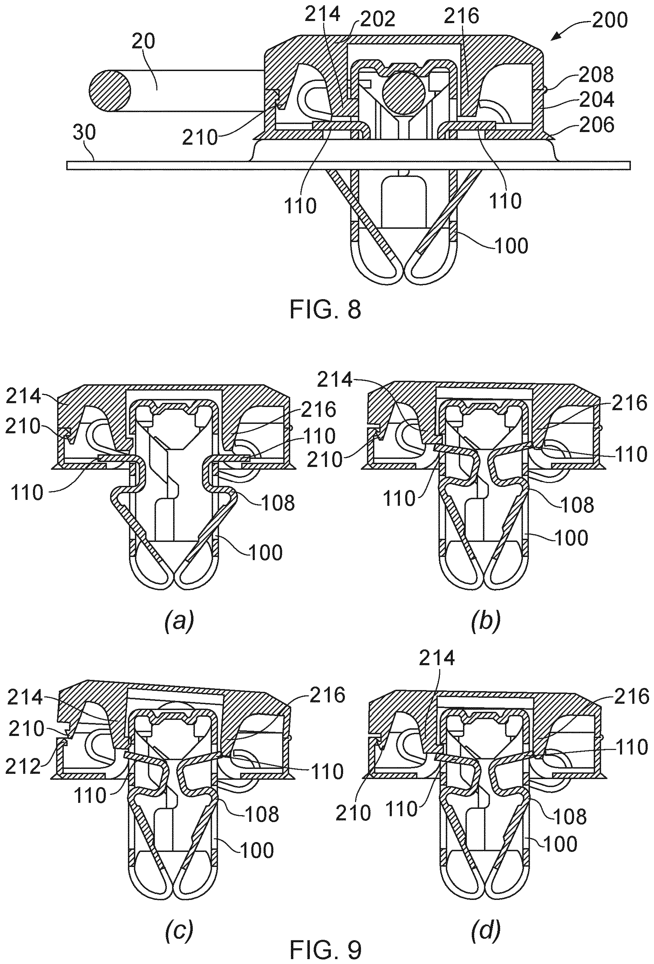

Projecting from a lower surface of the lid 202 are a first verification tab 214 and a second verification tab 216. The second verification tab 216 is spaced apart from the first verification tab 214 along the bottom surface of the lid 202. Although two verification tabs 214,216 are provided in this specific example embodiment, other embodiments may include a different number of verification tabs, for example one, three, four, or more. A hook 210 projects downward from the lower surface of the lid 202, between the first verification tab 214 and the edge of the lid 202. As best shown in Figure 5(b), the hook 210 is integrally formed with the first verification tab 214. The base 204 is provided with a catch (212, Figure 9(C)) at a location corresponding to the hook 210 when the lid 202 is in a closed position relative to the base 204. The first verification tab 214 is provided with a latch at a distal end away from the lid 202. The hook 210 extends laterally in a direction parallel to the lower surface of the lid 202. The latch of the first verification tab 214 extends laterally in a direction opposite to the direction of the hook 210.

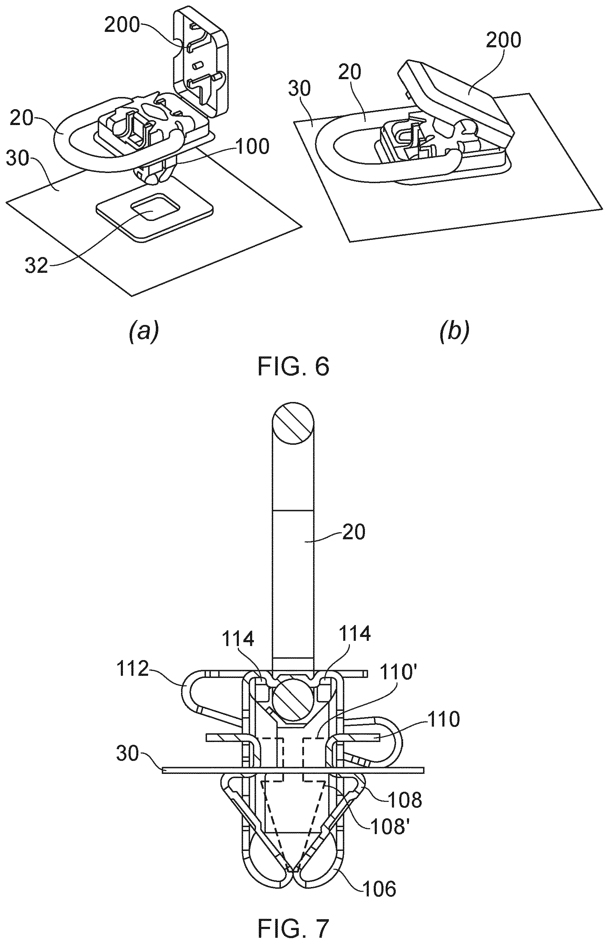

The fastening clip 100 will be described in more detail with reference to Figures 2 and 3, with a luggage ring 20 shown in an upstanding position. The body 104 of the fastening clip 100 is integrally formed with a head 102. The head 102 has an opening on its top surface, on which are provided mechanical stops 114 on opposite sides. These mechanical stops 114 act as a guide to secure the luggage ring 20 to the fastening clip 100 (best shown in Figure 7). The head 102 of the fastening clip 100 has holding arms 112 integral with and extending from opposite corners. The holding arms 112 are in contact with and partially surround the luggage ring 20 when the luggage ring 20 is secured to the fastening clip 100. This allows the luggage ring 20 to be maintained in a desired position by friction during use, such as in the upstanding position shown in Figure 2. The body 104 of the fastening clip 100 is provided with openings on the sides. The openings provide access for parts of the fastening clip 100 to extend through from the inside of the body 104 through to the outside. More specifically, the fastening clip 100 is provided with a pair of oppositely protruding resilient arms 110 extending through a respective pair of opposite upper openings in the body 104. The resilient arms 110 laterally protrude in a direction parallel to an upper surface of the head 102. The fastening clip 100 is also provided with a pair of oppositely protruding shoulders 108 extending through a respective pair of opposite lower openings in the body 104. The resilient arm 110 and shoulder 108 on each side are integrally formed, as best shown in Figure 7. At an end away from the head 102, the fastening clip 100 is provided with legs 106 for inserting into a panel structure, in order to secure the fastening clip 100 to the support structure.

Turning to Figures 4 and 5, to assemble the fastening clip 100 with the verification cap 200, the legs 106 of the fastening clip 100 are placed, from the top, downwards through the base 204 when the lid 202 is hinged open relative to the base 204. When the legs 106 are placed through the base 204, the head 102 of the fastening clip 100 is positioned in the interior space of the base 204. As best seen in Figure 4(a), two opposing pairs of teeth 218 are parallelly arranged and extending inwards and upwards from the base 204 sidewall. The distal ends of the teeth 218, away from the side wall, are provided with a latch for securing the head 102 of the fastening clip in place when the fastening clip 100 is placed within the verification cap 200. The top surface of the head 102 is flat, so that it can easily be engaged by a digit of a user to push the fastening clip 100 downwards. At the same time, the luggage ring 20 is held in place by the semi-circular cut-out of the base 204. In the open postion, the lid 202 and the base 204 are disengaged from one another at their respective lower and upper surfaces, but they remain connected by the hinge 208. Since the lid 202 and the base 204 are connected together by a hinge 208, the lid 202 is movable relative to the base 204 between an open position and a closed position. In the open position, the bottom end of the lid 202 side wall is disengaged from the top end of the base 204 side wall. In the closed position, the bottom end of the lid 202 side wall is engaged with the top end of the base 204 side wall. An example of the lid 202 in an open position is shown in Figure 5(a), where the lid 202 is angled 45 degrees relative to the base 204. An example of the lid 202 in a closed position is shown in Figure 5(b), where the lid 202 is arranged perpendicular to the base 204. Other orientations of the lid 202 with different angles are envisaged. Similarly, the angle of the luggage ring 20 relative to the base 204 can vary depending on the required application. In Figure 5(a), the luggage ring 20 is shown to be raised, offset relative to the base 204 by 45 degrees. In Figure 5(b), the luggage ring is 20 is lowered (i.e. 0 degrees) relative to the base 204. Other angles are also envisaged. In this example embodiment, once the luggage ring 20 has been placed into the desired position, it remains in that position since the holding arms 112 of the fastener clip 100 surround and hold the luggage ring 20 in place by friction. At the same time, the head 102 of the fastening clip 100 secures the luggage ring 20 by friction.

The insertion of the fastening clip 100 and verification cap 200 assembly into a panel 30 is illustrated in Figure 6. The legs 106 of the fastening clip 100 are inserted through an opening 32 of a panel 30. For example, the top surface of the head 102 can be engaged by a digit of a user to push the fastening clip 100 downwards. In this example embodiment, the bottom end of the base 204 side wall has a skirt 206 that covers the opening 32 of the panel 30 from view and provides sealing between the verification cap 200 and panel 30 when the fastening clip 100 is inserted. The skirt 206 prevents dust and water from entering into the opening 32 of the panel 30 and into the fastening clip 100. In order to hold the fastening clip 100 into place inside the panel 30, the shoulders 108 and the arms 110 are elastic and resiliently biased outwards. When the legs 106 of the fastening clip 100 are inserted into the panel opening 32, a force is exerted onto the shoulders 108 and arms 110 to urge them inwards, as indicated by the position denoted by the dashed line in Figure 7. The reference numeral 108 denotes the position of the shoulders before they are deformed inwardly by the force exerted. The reference numeral 108' denotes the position of the shoulders after deformation. The deformation of the shoulders 108 causes the resilient arms 110 to also deform inwards. The reference numeral 110 denotes the position of the arms before deformation caused by the deformation of the shoulders 108. The reference numeral 110 denotes the position of the arms after deformation. When the shoulders 108 and resilient arms 110 deform inwardly, the fastening clip 100 can fit through the opening 32 of the panel 30. After the resilient arms 110 and shoulders 108 are inserted through and clear the opening 32 of the panel 30, force is no longer exerted onto these components by the panel 30. The arms 110 and the shoulders 108 bias back outwards beyond the width of the opening 32, holding the fastening clip 100 in place, preventing removal.

The use of the verification cap 200 for verifying installation of a fastening clip 100 will now be described with reference to Figures 8 and 9. The verification cap 200 is able to verify whether a fastening clip 100 is fully (i.e. completely and properly) installed into a panel 30. After the fastening clip 100 has been secured to the panel 30, the verification cap 200 is also held in place since it is held by the fastening clip 100. In addition, the latch of the first verification tab 214 is held within an opening of the fastening clip 100 head 102 to secure the verification cap 200 in place.

As shown in Figure 8 and 9(a), when the fastening clip 100 is properly or correctly installed, the resilient arms 110 and the shoulders 108 move completely past the opening 32 of the panel 30, and bias back outwards to their original position, to secure the fastening clip 100 in place. This positions the resilient arms 110 in a way that occupies relatively little space towards the verification tabs 214,216. In this particular example embodiment, the resilient arms 110 are placed into a position laterally extending in a direction parallel to the panel 30. Since the resilient arms 110 occupy relatively little space, they can be accommodated within the predetermined space between the distal end of the verification tabs 214,216 and the base 204. This allows the lid 202 of the verification cap 200 to be placed into the closed position without the verification tabs 214,216 coming into contact with the resilient arms 110. When the verification cap 200 is in the closed position, the top end of the base 204 side wall is in contact with the bottom end of the lid 202 side wall. Also, in the closed position, the hook 210 of the lid 202 engages with a corresponding catch 212 of the base 204, to secure the lid 202 relative to the base 204. It is envisaged that this securement of the lid 202 to the base 204 may be releasable, so that the 202 lid and base 204 can be selectively engaged and disengaged with one another.

If the fastening clip 100 is not properly or correctly installed, then the resilient arms 110 and the shoulders 108 do not move completely past the opening 32 of the panel 30, as shown in Figures 9(b)-(d). As such, they remain in an inwardly deformed position due to a force exerted by the panel 30 onto the fastening clip 100. In this example embodiment, the inward bias of the shoulders 108 urges the resilient arms 110 inwards and upwards such that the resilient arms 110 come into contact with the verifications tabs 214, 216. This contact urges the lid 202 upward into an open position where the bottom of the lid 202 is disengaged with the top of the base 204. This provides a visual indication in a quick and simple manner that the fastening clip 100 is not properly or correctly installed into the panel 30. One or both of the resilient arms 110 may contact the corresponding verification tab 214,216 to urge the lid 202 upwards into an open position, indicating that the fastening clip 100 is not fully or properly installed.

Figure 10 shows an alternative embodiment of the verification cap 300 of the present invention. Here, the skirt 306 has been designed around the base 304 that is particularly adapted to eliminate, or at least minimise, any gapping between the base 304 of the cap 300 and the vehicle panel 30 (e.g. from a carpet in the trim). In addition, the skirt 306 comprises mechanical stops 310 for the luggage ring 20 adapted to prevent the luggage ring 20 from contacting the panel or trim (e.g. avoid rattling during movement). Further, the stops 310 (e.g. in the form of a ramp feature extending laterally outward from a centre portion of the skirt 306) allow for the luggage ring to be positioned at an angle with respect to the panel surface making it easier for the user to grab and pivot the luggage ring 20 during use. The ramp features of the stops 310 may be an integral part of the skirt 306 but may also be installed retrospectively.

In yet another alternative embodiment of the verification cap of the luggage ring assembly of the present invention (not shown), the predetermined spaces may be provided at the upper lid (e.g. through apertures or recesses within the interior surface of the upper lid) wherein verification tab(s) of a predetermined length are provided on an upper surface of the fastening clip, such that, when closing the upper lid, the verification tab(s) move into the apertures or recesses without contacting the inner surface of the lid when the fastening clip is installed correctly. In the event the fastening clip is not properly inserted, the verification tab(s) on the fastening clip will contactingly engage with the inner surface of the upper lid, preventing the lid to be closed.

It will be appreciated by persons skilled in the art that the above detailed examples have been described by way of example only and not in any limitative sense, and that various alterations and modifications are possible without departing from the scope of the invention as defined by the appended claims. Various modifications to the detailed examples described above are possible.

Through the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract or drawings), or to any novel one, or any novel combination, of the steps of any method or process so disclosed.

It will be appreciated by persons skilled in the art that the above embodiment(s) have been described by way of example only and not in any limitative sense, and that various alterations and modifications are possible without departing from the scope of the invention as defined by the appended claims. Various modifications to the detailed designs as described above are possible.

### Component list and reference numerals:

| | | | |
|---|---|---|---|
| 10 | Luggage ring assembly | 300 | Alternative verification cap |
| 20 | Luggage ring | 306 | Alternative skirt |
| 30 | Panel | 310 | Luggage ring stops |
| 32 | Opening | | |
| 100 | Fastening clip | | |
| 102 | Head | | |
| 104 | Body | | |
| 106 | Leg | | |
| 108 | Shoulder (before deformation) | | |
| 108' | Shoulder (after deformation) | | |
| 110 | Resilient arm (before deformation) | | |
| 110' | Resilient arm (after deformation) | | |
| 112 | Holding arm | | |
| 114 | Mechanical stop | | |
| 200 | Verification cap | | |
| 202 | Lid | | |
| 204 | Base | | |
| 206 | Skirt | | |
| 208 | Hinge | | |
| 210 | Hook | | |
| 212 | Catch | | |
| 214 | First verification tab | | |
| 216 | Second verification tab | | |
| 218 | Teeth | | |

## Claims

1. A verification cap assembly (10), comprising:
a fastening clip (100) for installation to at least one support structure (30), having a body portion (104) and a head portion (102), and
a verification cap (200, 300) for verifying installation of the fastening clip (100) to the at least one support structure (30), comprising:
a base member (204), comprising an enclosing side wall defining an interior space between an open bottom end portion and an open top end portion, configured to retainingly receive at least a portion of the fastening clip (100) during assembly, and
a cover member (202), hingeably connected to said base member (204) and movable between a closed position, lockingly engaged with said top end portion of said side wall, and an open position, disengaged from said top end portion of said side wall, comprising at least one stop member (214, 216) projecting away from said cover member (202) into said interior space so as to define a predetermined restricted space for accommodating at least one component (108, 110) of the fastening clip (100) between said bottom end portion and a distal end of said stop member (214, 216) when said cover member (202) is in said closed position, during use,
wherein the verification cap (200, 300) is adapted to enclosingly receive said fastening clip (100) when fastened to the at least one support structure (30).

2. A verification cap assembly according to claim 1, wherein said interior space is configured to retainingly receive the head portion (102) of the fastening clip (100), during assembly.

3. A verification cap assembly according to any one of claims 1 and 2, wherein said stop member (214, 216) is configured to contactingly engage with the at least one component (108, 110) when the at least one component (108, 110) is not entirely contained within said predetermined restricted space of said base member (204).

4. A verification cap assembly according to any one of the preceding claims, wherein said stop member (214, 216) comprises a latch at a distal end configured to catchingly engage with an aperture of the fastening clip (100) when in said closed position.

5. A verification cap assembly according to any one of the preceding claims, wherein said base member (204) comprises two opposing parallelly arranged pairs of teeth (218) adapted to retainingly couple with the head portion (102) of the fastening clip (100).

6. A verification cap assembly according to claim 5, wherein said teeth (218) extend from said side wall into said interior space and up towards said top end portion.

7. A verification cap assembly according to claim 5 or claim 6, wherein said teeth (218) comprise a latch portion configured to engage with the head portion (102) of the fastening clip (100).

8. A verification cap assembly according to any one of the preceding claims, wherein said cover member (202) comprises a lock member (210) projecting away from said cover member (202), and said base member (204) comprises a respective catch (212) member configured to lockingly engage with said lock member (210) when said cover member (202) is in said closed position.

9. A verification cap assembly according to claim 8, wherein said catch member (212) is further adapted to selectively disengage from said lock member (210).

10. A verification cap assembly according to any one of the preceding claims, comprising two parallelly arranged stop members (214, 216), spaced apart from one another at a distance corresponding to a distance between two respective components (108, 110) of the fastening clip (100).

11. A verification cap assembly according to any one of the preceding claims, wherein the at least one component (108, 110) is a bearing surface of an elastically deformable biasing member of the fastening clip (100), the bearing surface extending in a direction substantially parallel to a flat upper surface of the head portion (102) of the fastening clip (100).

12. A verification cap assembly according to any one of the preceding claims, wherein said base member (204) comprises a skirt portion (206) projecting laterally outwardly from said bottom end portion and adapted to provide a seal between said verification cap (200, 300) and the support structure (30), during use.

13. A verification cap assembly according to any one of the preceding claims, wherein said fastening clip (100) further comprises a pivotably movable ring member (20) operably arranged outside said verification cap (200, 300).

14. A verification cap assembly according to claim 13, wherein said ring member (20) is operably coupled to and forming a friction fit with said head portion (102) of said fastening clip (100).

## Patentansprüche

1. Überprüfungskappenbaugruppe (10), aufweisend:
eine Befestigungsklammer (100) zur Installation an zumindest einer Trägerstruktur (30), mit einem Körperabschnitt (104) und einem Kopfabschnitt (102), und
eine Überprüfungskappe (200, 300) zum Verifizieren der Installation der Befestigungsklammer (100) an der zumindest einen Trägerstruktur (30), aufweisend:
ein Basiselement (204), das eine umschließende Seitenwand aufweist, die einen Innenraum zwischen einem offenen unteren Endabschnitt und einem offenen oberen Endabschnitt definiert, ausgestaltet, während der Montage zumindest einen Abschnitt der Befestigungsklammer (100) haltend aufzunehmen, und
ein Abdeckelement (202), gelenkig mit dem Basiselement (204) verbunden und zwischen einer geschlossenen Position, verriegelnd mit dem oberen Endabschnitt der Seitenwand im Eingriff, und einer geöffneten Position, von dem oberen Endabschnitt der Seitenwand gelöst, aufweisend zumindest ein Anschlagelement (214, 216), das von dem Abdeckelement (202) weg in den Innenraum ragt, um einen vorbestimmten begrenzten Raum zum Aufnehmen zumindest einer Komponente (108, 110) der Befestigungsklammer (100) zwischen dem unteren Endabschnitt und einem distalen Ende des Anschlagelements (214, 216) zu definieren, wenn sich das Abdeckelement (202) während der Benutzung in der geschlossenen Position befindet,
wobei die Überprüfungskappe (200, 300) ausgelegt ist, die Befestigungsklammer (100) umschließend aufzunehmen, wenn sie an der zumindest einen Trägerstruktur (30) befestigt wird.

2. Überprüfungskappenbaugruppe nach Anspruch 1, wobei der Innenraum ausgestaltet ist, um während der Montage den Kopfabschnitt (102) der Befestigungsklammer (100) haltend aufzunehmen.

3. Überprüfungskappenbaugruppe nach einem der Ansprüche 1 und 2, wobei das Anschlagelement (214, 216) ausgestaltet ist, um mit der zumindest einen Komponente (108, 110) in Kontakteingriff zu kommen, wenn die zumindest eine Komponente (108, 110) nicht vollständig in dem vorbestimmten begrenzten Raum des Basiselements (204) enthalten ist.

4. Überprüfungskappenbaugruppe nach einem der vorhergehenden Ansprüche, wobei das Anschlagelement (214, 216) einen Riegel an einem distalen Ende aufweist, der ausgestaltet ist, um in der geschlossenen Position mit einer Öffnung der Befestigungsklammer (100) festhaltend in Eingriff zu kommen.

5. Überprüfungskappenbaugruppe nach einem der vorhergehenden Ansprüche, wobei das Basiselement (204) zwei gegenüberliegende, parallel angeordnete Paare von Zähnen (218) aufweist, die ausgelegt sind, um mit dem Kopfabschnitt (102) der Befestigungsklammer (100) haltend zu koppeln.

6. Überprüfungskappenbaugruppe nach Anspruch 5, wobei sich die Zähne (218) von der Seitenwand in den Innenraum und nach oben in Richtung des oberen Endabschnitts erstrecken.

7. Überprüfungskappenbaugruppe nach Anspruch 5 oder 6, wobei die Zähne (218) einen Riegelabschnitt aufweisen, der ausgestaltet ist, um mit dem Kopfabschnitt (102) der Befestigungsklammer (100) in Eingriff zu kommen.

8. Überprüfungskappenbaugruppe nach einem der vorhergehenden Ansprüche, wobei das Abdeckelement (202) ein Sperrelement (210) aufweist, das von dem Abdeckelement (202) hervorsteht, und das Basiselement (204) ein jeweiliges Rastelement (212) aufweist, das ausgestaltet ist, um mit dem Sperrelement (210) verriegelnd in Eingriff zu sein, wenn das Abdeckelement (202) in der geschlossenen Position ist.

9. Überprüfungskappenbaugruppe nach Anspruch 8, wobei das Rastelement (212) ferner ausgelegt ist, um selektiv von dem Sperrelement (210) gelöst zu werden.

10. Überprüfungskappenbaugruppe nach einem der vorhergehenden Ansprüche, aufweisend zwei parallel angeordnete Anschlagelemente (214, 216), die voneinander in einem Abstand beabstandet sind, der einem Abstand zwischen zwei jeweiligen Komponenten (108, 110) der Befestigungsklammer (100) entspricht.

11. Überprüfungskappenbaugruppe nach einem der vorhergehenden Ansprüche, wobei die zumindest eine Komponente (108, 110) eine Lagerfläche eines elastisch verformbaren Vorspannelements der Befestigungsklammer (100) ist, wobei sich die Lagerfläche in einer Richtung im Wesentlichen parallel zu einer flachen oberen Fläche des Kopfabschnitts (102) der Befestigungsklammer (100) erstreckt.

12. Überprüfungskappenbaugruppe nach einem der vorhergehenden Ansprüche, wobei das Basiselement (204) einen Schürzenabschnitt (206) aufweist, der von dem unteren Endabschnitt seitlich nach außen vorsteht und ausgelegt ist, um während der Benutzung eine Dichtung zwischen der Überprüfungskappe (200, 300) und der Trägerstruktur (30) bereitzustellen.

13. Überprüfungskappenbaugruppe nach einem der vorhergehenden Ansprüche, wobei die Befestigungsklammer (100) ferner ein schwenkbar bewegliches Ringelement (20) aufweist, das betriebsbereit außerhalb der Überprüfungskappe (200, 300) angeordnet ist.

14. Überprüfungskappenbaugruppe nach Anspruch 13, wobei das Ringelement (20) betriebsbereit mit dem Kopfabschnitt (102) der Befestigungsklammer (100) gekoppelt ist und eine Reibpassung mit diesem bildet.

## Revendications

1. Ensemble de bouchon de vérification (10), comprenant :
une pince de fixation (100) destinée à être installée sur au moins une structure de support (30), ayant une portion de corps (104) et une portion de tête (102), et
un bouchon de vérification (200, 300) pour vérifier l'installation de la pince de fixation (100) sur l'au moins une structure de support (30), comprenant :
un élément de base (204), comprenant une paroi latérale enveloppante définissant un espace intérieur entre une portion d'extrémité inférieure ouverte et une portion d'extrémité supérieure ouverte, configurée pour recevoir de manière retenue au moins une portion de la pince de fixation (100) pendant l'assemblage, et
un élément de couvercle (202), connecté de manière articulée audit élément de base (204) et mobile entre une position fermée, en prise de manière verrouillable avec ladite portion d'extrémité supérieure de ladite paroi latérale, et une position ouverte, dégagé de la prise avec ladite portion d'extrémité supérieure de ladite paroi latérale, comprenant au moins un élément de butée (214, 216) faisant saillie à l'opposé dudit élément de couvercle (202) dans ledit espace intérieur de manière à définir un espace restreint prédéterminé pour accueillir au moins un composant (108, 110) de la pince de fixation (100) entre ladite portion d'extrémité inférieure et une extrémité distale dudit élément de butée (214, 216) lorsque ledit élément de couvercle (202) est dans ladite position fermée, pendant l'utilisation,
dans lequel le bouchon de vérification (200, 300) est adapté pour recevoir par enserrement ladite pince de fixation (100) lorsqu'il est fixé à l'au moins une structure de support (30) .

2. Bouchon de vérification selon la revendication 1, dans lequel ledit espace intérieur est configuré pour recevoir de manière retenue la portion de tête (102) de la pince de fixation (100), pendant l'assemblage.

3. Bouchon de vérification selon l'une quelconque des revendications 1 et 2, dans lequel ledit élément de butée (214, 216) est configuré pour venir en prise par contact avec l'au moins un composant (108, 110) lorsque l'au moins un composant (108, 110) n'est pas entièrement contenu au sein dudit espace restreint prédéterminé dudit élément de base (204).

4. Ensemble de bouchon de vérification selon l'une quelconque des revendications précédentes, dans lequel ledit élément de butée (214, 216) comprend un loquet au niveau d'une extrémité distale configuré pour venir en prise par encliquetage avec une ouverture de la pince de fixation (100) lorsqu'il est dans ladite position fermée.

5. Bouchon de vérification selon l'une quelconque des revendications précédentes, dans lequel ledit élément de base (204) comprend deux paires de dents (218) agencées parallèlement et opposées, adaptées pour s'accoupler de manière retenue à la portion de tête (102) de la pince de fixation (100).

6. Ensemble de bouchon de vérification selon la revendication 5, dans lequel lesdites dents (218) s'étendent depuis ladite paroi latérale jusque dans ledit espace intérieur et vers le haut en direction de ladite portion d'extrémité supérieure.

7. Bouchon de vérification selon la revendication 5 ou la revendication 6, dans lequel lesdites dents (218) comprennent une portion de loquet configurée pour venir en prise avec la portion de tête (102) de la pince de fixation (100).

8. Bouchon de vérification selon l'une quelconque des revendications précédentes, dans lequel ledit élément de couvercle (202) comprend un élément de verrouillage (210) faisant saillie à partir dudit élément de couvercle (202), et ledit élément de base (204) comprend un élément d'accrochage (212) respectif configuré pour venir en prise de manière verrouillable avec ledit élément de verrouillage (210) lorsque ledit élément de couvercle (202) est dans ladite position fermée.

9. Ensemble de bouchon de vérification selon la revendication 8, dans lequel ledit élément d'accrochage (212) est en outre adapté pour se dégager sélectivement de la prise avec ledit élément de verrouillage (210) .

10. Ensemble de bouchon de vérification selon l'une quelconque des revendications précédentes, comprenant deux éléments de butée (214, 216) agencés parallèlement, espacés l'un de l'autre d'une distance correspondant à une distance entre deux composants (108, 110) respectifs de la pince de fixation (100).

11. Ensemble de bouchon de vérification selon l'une quelconque des revendications précédentes, dans lequel l'au moins un composant (108, 110) est une surface d'appui d'un élément de sollicitation élastiquement déformable de la pince de fixation (100), la surface d'appui s'étendant dans une direction sensiblement parallèle à une surface supérieure plate de la portion de tête (102) de la pince de fixation (100).

12. Ensemble de bouchon de vérification selon l'une quelconque des revendications précédentes, dans lequel ledit élément de base (204) comprend une portion de jupe (206) faisant saillie latéralement vers l'extérieur depuis ladite portion d'extrémité inférieure et adaptée pour fournir un joint entre ledit bouchon de vérification (200, 300) et la structure de support (30), pendant l'utilisation.

13. Ensemble de bouchon de vérification selon l'une quelconque des revendications précédentes, dans lequel ladite pince de fixation (100) comprend en outre un élément annulaire mobile de manière pivotante (20) agencé de manière fonctionnelle à l'extérieur dudit bouchon de vérification (200, 300).

14. Ensemble de bouchon de vérification selon la revendication 13, dans lequel ledit élément annulaire (20) est couplé de manière fonctionnelle à ladite portion de tête (102) de ladite pince de fixation (100) et forme un ajustement par friction avec celle-ci .
